(19) Europäisches Patentamt / European Patent Office / Office européen des brevets

(11) **EP 2 632 146 B1**

(12) **EUROPEAN PATENT SPECIFICATION**

(45) Date of publication and mention
of the grant of the patent:
**03.07.2019 Bulletin 2019/27**

(51) Int Cl.:
***H04N 5/217*** *(2011.01)*

(21) Application number: **13155481.8**

(22) Date of filing: **15.02.2013**

(54) **Image processing apparatus**

Bildverarbeitungsvorrichtung

Appareil de traitement d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2012 JP 2012034756**

(43) Date of publication of application:
**28.08.2013 Bulletin 2013/35**

(73) Proprietor: **Ricoh Company, Ltd.
Tokyo 143-8555 (JP)**

(72) Inventors:
• **Yoshida, Kazuhiro
Tokyo 143-8555 (JP)**
• **Hara, Takayuki
Tokyo 143-8555 (JP)**
• **Kataoka, Akira
Tokyo 143-8555 (JP)**
• **Nishimura, Takeyoshi
Tokyo 143-8555 (JP)**
• **Watanabe, Yoshikazu
Tokyo 143-8555 (JP)**

(74) Representative: **J A Kemp
14 South Square
Gray's Inn
London WC1R 5JJ (GB)**

(56) References cited:
JP-A- 2007 050 110      US-A1- 2006 232 690
US-A1- 2008 273 793      US-A1- 2009 324 089
US-A1- 2010 259 650

## Description

The present invention relates to an image processing apparatus having a function of reducing noise contained in image data.

Image data (hereinafter sometimes called an "image") captured by an image capturing apparatus such as a digital camera or a scanner contains noise such as shot noise or dark current noise because of characteristics of an image sensor or circuitry included in the image capturing apparatus. In order to obtain a high-quality image from the captured image, it is necessary to reduce the noise in the image.

However, when a low-pass filter is simply used to reduce noise in an image, an important element in the image, such as an edge, is also lost, which thus degrades image quality. For the noise reduction of image data, it is therefore necessary to perform adaptive noise reduction according to characteristics of a region of the image.

An $\varepsilon$-filter is devised as one of noise reduction technologies for image data. (Refer to Hiroshi Harashima, Kaoru Odajima, Yoshiaki Shishikui, and Hiroshi Miyakawa, "$\varepsilon$-separating nonlinear digital filter and its applications," IEICE Transactions A, Vol. J65-A, No. 4, pp. 297-304, 1982.) The $\varepsilon$-filter filter performs filtering processing using a neighboring pixel whose signal difference from a pixel of interest is equal to or less than a certain threshold value, thereby to enable reducing noise while storing a component having a large signal difference, such as an edge.

There is also known a technology for realizing reduction in signal-dependent noise in a color image at lower computing cost (Refer to JP-A 2010-218110). The technology of JP-A 2010-218110 involves selecting a similar pixel group around a pixel of interest by using principles based on the $\varepsilon$-filter, and reflecting a characteristic of the similar pixel group in a conversion process for differences between calculated results obtained by the $\varepsilon$-filter and a process-target pixel value. The technology of JP-A 2010-218110 as described above is useful for reduction of luminance noise in an image, the noise being noticeable by signal differences in small areas other than an edge.

However, the technology of JP-A 2010-218110 is weak in the effect of eliminating wide-range noise having a small signal difference between a pixel of interest and neighboring pixels, such as color noise, because the technology uses only a small number of neighboring pixels as reference pixels. Meanwhile, when the number of reference pixels for use in noise elimination is increased in order to enhance the effect of eliminating the noise having the small signal difference between the pixel of interest and the neighboring pixels, a frame memory needs to have a large capacity. Therefore, the technology of JP-A 2010-218110 poses the problem of increasing the hardware configuration size and costs.

JP 2007 050110 A discloses an image processing device in which a filtering process including at least all the adjacent pixels to a target pixel is repeated based on the luminance of the target pixel.

The present invention has been made in view of the foregoing problem. An object of the present invention is to provide an image processing apparatus capable of achieving efficient noise elimination of even noise having a small signal difference between a pixel of interest and neighboring pixels.

To attain the above object, one embodiment of the present invention provides an image processing apparatus including: a filtering unit configured to extract a pixel having a high degree of similarity to a pixel of interest by comparing signal values of the pixel of interest and its neighboring pixels in a process-target area containing the pixel of interest in a process-target image, and perform operations for filtering processing by using the extracted pixel; and a processing-repetition number decision unit configured to determine the number of repetitions of the filtering processing based on a predetermined condition held by a process-target pixel or the process-target area, the filtering processing being repeated while setting a result of the filtering processing obtained by the filtering unit as a new signal value of the pixel of interest.

The accompanying drawings are included to provide further understanding of the invention, and are incorporated in and constitute a part of this specification. The drawings illustrate embodiments of the invention and, together with the specification, serve to explain the principle of the invention.

FIG. 1 is a front view of an image capturing apparatus as an image processing apparatus, illustrating an embodiment of the image processing apparatus according to the present invention.

FIG. 2 is a top view of the image processing apparatus.

FIG. 3 is a rear view illustrating an example of the image processing apparatus.

FIG. 4 is a functional block diagram illustrating an example of an electrical control system of the image processing apparatus.

FIG. 5 is a functional block diagram of an image processing unit of the image processing apparatus.

FIG. 6 is a flowchart illustrating noise reduction processing performed by the image processing apparatus.

FIGS. 7A to 7D are illustrations of an example of image filtering processing performed by the image processing apparatus.

FIG. 8 is a schematic representation of assistance in explaining calculation of an average value and variance.

FIG. 9 is a graph illustrating noise variance relative to a signal value (or a pixel value) in the image filtering processing.

FIG. 10 is a graph illustrating an estimation function of the amount of noise relative to the average value of a similar pixel group in the image filtering processing.

FIG. 11 is a representation illustrating an example in which a difference between the average value and the process-target pixel value is projected in a one-dimensional specific direction to perform weight addition.

FIG. 12 is a graph illustrating an estimation function of the amount of noise relative to the number of repetitions of the image filtering processing in the noise reduction processing.

FIGS. 13A to 13D are tables illustrating examples of tables which determine the number of repetitions of the image filtering processing in the noise reduction processing by the image processing apparatus.

FIG. 14 is an illustration of an example of division of a process-target image into regions in the noise reduction processing.

FIG. 15 is an illustration of an example of the number of repetitions for each of the regions of the process-target image as divided into the regions.

FIG. 16 is an illustration of an example of measurement of a distance between a focus point and a process-target region in the noise reduction processing using the division into the regions.

FIGS. 17A and 17B are tables illustrating examples of tables which determine the number of repetitions of the image filtering processing using the division into the regions.

FIG. 18 is an illustration of an example of a Bayer pattern.

The invention is set out in the appended set of claims.

Embodiments of an image processing apparatus according to the present invention will be described below with reference to the drawings.

Incidentally, as described later, the image processing apparatus according to the present invention is an apparatus for performing processing for reducing noise in image data captured by an image capturing apparatus. As a method for implementing the image processing apparatus, the image processing apparatus may be implemented as one function of the image capturing apparatus which captures image data of a process target, or the image processing apparatus may be implemented as a separate apparatus from the image capturing apparatus. Herein, in the following description, the image capturing apparatus will be described by way of example as being implemented as the image processing apparatus.

(Embodiment of Image Processing Apparatus)

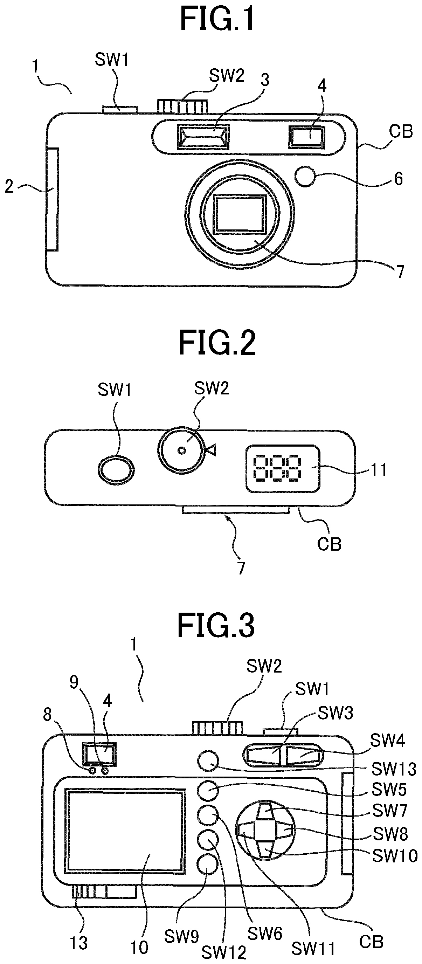

FIG. 1 is a view illustrating an embodiment of an image processing apparatus, and is a front view of an image capturing apparatus as the image processing apparatus. In FIG. 1, a front face of a camera body CB as a casing of an image capturing apparatus 1 is provided with an arrangement of a flash firing unit 3, an objective surface of a viewfinder 4, a remote control photo-detector 6, and a lens barrel unit 7 which forms imaging optics including a taking lens. One side face portion of the camera body CB is provided with a lid 2 of a memory card loading compartment and a battery loading compartment.

FIG. 2 is a top view of the image capturing apparatus 1. In FIG. 2, a top face of the camera body CB is provided with an arrangement of a release switch SW1, a mode dial SW2, and a sub liquid crystal display (or a sub-LCD) 11 (hereinafter, a "liquid crystal display" will be called an "LCD").

FIG. 3 is a rear view of the image capturing apparatus 1. In FIG. 3, a rear face of the camera body CB is provided with an arrangement of an eyepiece portion of the viewfinder 4, an AF (autofocus) light emitting diode 8 (hereinafter, a "light emitting diode" will be called an "LED"), a flash LED 9, an LCD monitor 10 as a display unit for displaying a subject image and an enlarged image and various setting screens, a power switch 13, a wide-angle direction zoom switch SW3, a telephotographic direction zoom switch SW4, a set and cancel switch SW5 for a self-timer, a menu switch SW6, a move-up and flash set switch SW7, a move-right switch SW8, a display switch SW9, a move-down and macro switch SW10, a move-left and image review switch SW11, an OK switch SW12, and a quick access switch SW13.

(Functional Blocks of Image Capturing Apparatus)

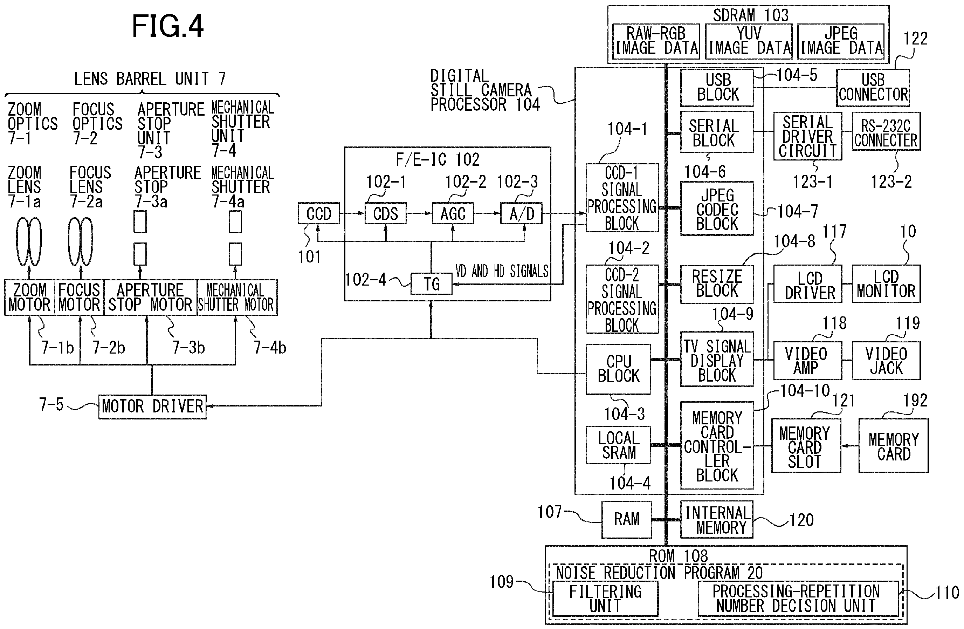

Next, description will be given with regard to an example of functional blocks of the image capturing apparatus 1. FIG. 4 is a functional block diagram illustrating an example of a functional configuration of the image capturing apparatus 1. Various operations (or processing) of the image capturing apparatus 1 are controlled by a digital still camera processor 104 (hereinafter called merely a "processor 104") formed of a digital signal processing IC (integrated circuit) or the like, and by an imaging program which runs on the processor 104. The processor 104 as an image processing unit includes a first CCD (charge coupled device) signal processing block 104-1, a second CCD signal processing block 104-2, a CPU (central processing unit) block 104-3, local SRAM (static random access memory) 104-4, a USB (Universal Serial Bus) block 104-5, a serial block 104-6, a JPEG (Joint Photographic Experts Group) CODEC (coder/decoder) block 104-7, a resize block 104-8, a TV (television) signal display block 104-9, and a memory card controller block 104-10. These blocks are connected to each other by a bus-line.

The processor 104 is provided externally with an arrangement of SDRAM (synchronous dynamic random access memory) 103 for storing RAW-RGB image data, YUV image data and JPEG image data, RAM (random access memory) 107, an internal memory 120, and ROM (read only memory) 108 storing a control program as the imaging program, and these are connected to the processor 104 through the bus-line. The processor 104 executes various control programs stored in the ROM 108 thereby to implement functions of the various control programs. The SDRAM 103 corresponds to a frame memory. The various control programs stored in the ROM 108 include a noise reduction program 20 as a program for implementing operation of the image processing apparatus according to the present invention. In short, in the image capturing apparatus 1, the noise reduction program 20 stored in the ROM 108 is executed by the processor 104, and the SDRAM 103, the RAM 107 and the internal memory 120 are used, and thereby, functions of a filtering unit 109 and a processing-repetition number decision unit 110 of an image processing apparatus 100 are implemented.

The entity of the processor 104 is a computer to which the CPU block 104-3 or the like is mainly connected by a bus, and the noise reduction program 20 stored in the ROM 108 is executed by the CPU block 104-3 thereby to perform noise reduction processing described below on image data.

Incidentally, the noise reduction processing may be packaged in hardware (unillustrated) such as an ASIC (application specific integrated circuit).

The noise reduction program 20 is stored beforehand in the ROM 108. Here, the noise reduction program may be stored on a memory card 192 and loaded into the ROM 108 through a memory card slot 191. Alternatively, the noise reduction program 20 may be downloaded into the ROM 108 through a network (unillustrated).

The lens barrel unit 7 includes zoom optics 7-1 having a zoom lens 7-1a, focus optics 7-2 having a focus lens 7-2a, an aperture stop unit 7-3 having an aperture stop 7-3a, and a mechanical shutter unit 7-4 having a mechanical shutter 7-4a, and these form the imaging optics.

The zoom optics 7-1, the focus optics 7-2, the aperture stop unit 7-3 and the mechanical shutter unit 7-4 are driven by a zoom motor 7-1b, a focus motor 7-2b as a unit for effecting movement of the focus lens, an aperture stop motor 7-3b and a mechanical shutter motor 7-4b, respectively.

The zoom motor 7-1b, the focus motor 7-2b, the aperture stop motor 7-3b and the mechanical shutter motor 7-4b are driven by a motor driver 7-5. The motor driver 7-5 operates under control of the CPU block 104-3 of the processor 104.

The zoom lens 7-1a and the focus lens 7-2a which form the lens barrel unit 7 form the taking lens for forming a subject image on a photo-detection surface of a CCD (Charge Coupled Device) 101 as an image sensor. The CCD 101 converts the subject image formed on the photo-detection surface into an electrical image signal, which is then outputted to an F/E-IC (front end IC) 102.

Incidentally, in the embodiment, the image sensor is not limited to the CCD, and a CMOS (Complementary Metal Oxide Semiconductor), for example, may be used as the image sensor.

The F/E-IC 102 includes a CDS (correlation double sampling unit) 102-1, an AGC (automatic gain control unit) 102-2, and an A-D (analog-to-digital) converter 102-3, and performs predetermined processing on the image signal into which the subject image is converted, thereby to convert the image signal into a digital signal. The converted digital image signal is inputted to the first CCD signal processing block 104-1. These signal processing operations are controlled through a TG (timing generator) 102-4 by a VD signal (or a vertical driving signal) and an HD signal (or a horizontal driving signal) outputted by the first CCD signal processing block 104-1 of the processor 104.

The first CCD signal processing block 104-1 performs signal processing such as white balance adjustment and γ-adjustment on digital image data inputted from the CCD 101 via the F/E-IC 102 to the block 104-1, and also outputs the VD signal and the HD signal.

Also, under control of the CPU block 104-3, a flash circuit 114 operates to cause the flash firing unit 3 to emit illumination light.

The USB block 104-5 is joined to a USB connector 122. The serial block 104-6 is joined to an RS-232C connector 123-2 through a serial driver circuit 123-1.

The TV signal display block 104-9 is joined to the LCD monitor 10 through an LCD driver 117, and also, the TV signal display block 104-9 is joined to a video jack 119 through a video amplifier (AMP) 118.

The memory card controller block 104-10 is joined to a card contact point of the memory card slot 191. When the memory card 192 is loaded into the memory card slot 191, the memory card controller block 104-10 comes into contact with and makes an electrical connection to a contact point of the memory card 192 thereby to store an image file on the loaded memory card 192.

(Operation of Image Capturing Apparatus)

Next, description will be given with regard to operation of the image capturing apparatus 1. In the image capturing apparatus 1 illustrated in FIGS. 1 to 3, when the mode dial SW2 is operated to select "recording mode," the image capturing apparatus 1 starts operating in the recording mode. More specifically, when the CPU block 104-3 detects that the mode dial SW2 included in an operation key unit (SW1 to SW13) illustrated in FIG. 3 is set to turn the recording mode on, operation starts in the recording mode.

The CPU block 104-3 controls the motor driver 7-5 to cause the lens barrel unit 7 to move to a position capable of image capture. Further, the units such as the CCD 101, the F/E-IC 102 and the LCD monitor 10 are powered on to start operating. When the units are powered on, operation starts in viewfinder mode.

In the image capturing apparatus 1 under operating conditions in the viewfinder mode, an image signal of a subject image formed on the photo-detection surface of the CCD 101 through the taking lens is outputted to the CDS 102-1. This analog RGB signal is converted into a digital image signal by the A-D converter 102-3 via the AGC (automatic gain control unit) 102-2. The RGB signals contained in the digital image signal are converted into YUV image data by a YUV conversion unit included in the second CCD signal processing block 104-2 in the processor 104, and the YUV image data is recorded in the SDRAM 103 as the frame memory. Incidentally, the second CCD signal processing block 104-2 performs appropriate processing such as filtering processing on the RGB image signals thereby to convert the RGB image signals into the YUV image data.

The YUV image data is read by the CPU block 104-3, is sent to the video amplifier 118 and the video jack 119 through the TV signal display block 104-9, and is displayed on a TV (television) set connected to them.

Also, the YUV image data read by the CPU block 104-3 is sent to the LCD monitor 10 through the LCD driver 117 and is provided for display. This processing is performed at intervals of 1/30 of a second to update the display and perform the operation in the viewfinder mode in which an image of a subject as an image capturing object can be captured while being visually identified by being displayed on the LCD monitor 10.

The CCD 101 can set plural drive modes (or driving conditions). Output conditions for an output image signal from the CCD 101 can be changed by the drive modes. Examples of the drive modes include "mode in which neither 'addition and thinning-out' of horizontal pixels nor 'addition and thinning-out' of vertical pixels is performed" (hereinafter called "mode 1"), "mode in which horizontal pixels are 'added by two pixels' and vertical pixels are 'added by two pixels'" (hereinafter called "mode 2"), "mode in which horizontal pixels are 'added by four pixels' and vertical pixels are 'thinned out by two pixels'" (hereinafter called "mode 3"), and "mode in which vertical pixels are 'added by four pixels' without 'addition and thinning-out' of horizontal pixels" (hereinafter called "mode 4").

(Example 1 of Noise Reduction Processing)

Next, description will be given as Example 1 with regard to an example of noise reduction processing for image data, including image filtering processing and processing for determining the number of repetitions of the image filtering processing, which is executed by the image capturing apparatus 1 for the purpose of reducing noise in the image data. In Example 1, an example is given in which the image filtering processing is repeated throughout the entire area of a process-target image at the time of reduction in noise whose magnitude depends on a signal value, in a color image having pixels each having three, RGB components.

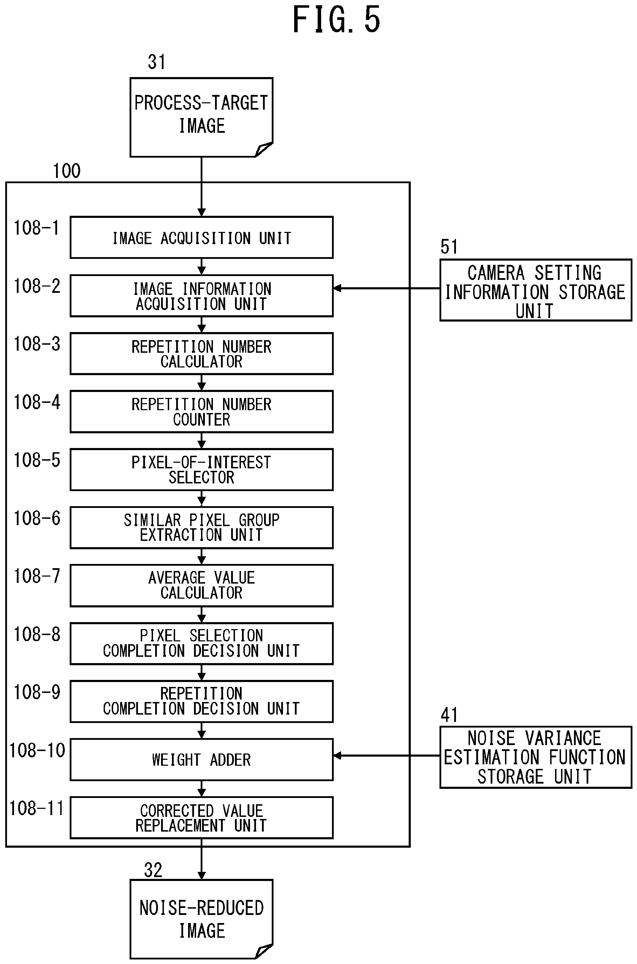

FIG. 5 illustrates an example of a functional block diagram of the image processing apparatus implemented by the image capturing apparatus 1. The image processing apparatus 100 performs the image filtering processing by a predetermined number of repetitions on image data (hereinafter called a process-target image 31) as input data thereby to output a noise-reduced image 32.

The image processing apparatus 100 includes, as functional blocks, an image acquisition unit 108-1, an image information acquisition unit 108-2, a camera setting information storage unit 51, a repetition number calculator 108-3, a repetition number counter 108-4, a pixel-of-interest selector 108-5, a similar pixel group extraction unit 108-6, an average value calculator 108-7, a pixel selection completion decision unit 108-8, a repetition completion decision unit 108-9, a weight adder 108-10, a noise variance estimation function storage unit 41, and a corrected value replacement unit 108-11. The functional blocks are implemented by the CPU block 104-3 executing the noise reduction program 20.

The image acquisition unit 108-1, the pixel-of-interest selector 108-5, the similar pixel group extraction unit 108-6, the average value calculator 108-7 and the pixel selection completion decision unit 108-8 act as the filtering unit 109 to perform operations for the image filtering processing. Also, the image information acquisition unit 108-2, the camera setting information storage unit 51, the repetition number calculator 108-3 and the repetition number counter 108-4 act as the processing-repetition number decision unit 110 to determine the number of repetitions of the filtering processing.

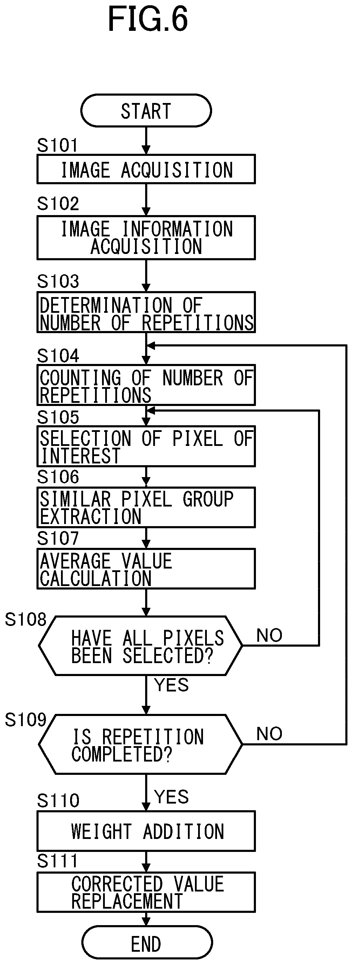

FIG. 6 illustrates an example of a flowchart illustrating a procedure for image processing. Processing performed by the functional blocks will be described below according to the flowchart of FIG. 6.

When the image processing apparatus 100 starts the image filtering processing, the image acquisition unit 108-1 acquires the process-target image 31 from the SDRAM 103 storing the process-target image 31 (at processing step S101). Although the process-target image 31 is image data captured by the image capturing apparatus 1 including the image processing apparatus 100, other image data (for example, image data captured by other image capturing apparatuses) may be used.

When the process-target image 31 is acquired, the image information acquisition unit 108-2 acquires camera setting information at the time of image capture, and image characteristic information, as image information, from the process-target image 31 (at processing step S102).

Here, the camera setting information at the time of image capture is information which can be acquired from Exif (Exchangeable Image File Format) information generally appended by a digital camera or the like, or makers' own information (i.e. maker notes) written in a file of image data by camera makers, provided that the image is JPEG (Joint Photographic Experts Group) image data. Examples of information acquired from the camera setting information include ISO (International Organization for Standardization) film speed, and light source information (including WB (White Balance)).

When the image processing apparatus 100 serves as a function internal to the image capturing apparatus 1 to perform the processing, the camera setting information at the time of image capture is held in the camera setting information storage unit 51 in the image capturing apparatus 1. Thus, the image information acquisition unit 108-2 acquires the camera setting information from the camera setting information storage unit 51.

Also, the image characteristic information is information obtained by calculating a luminance value and a standard deviation from the captured process-target image 31. A method for calculating the image characteristic information will be described later.

The repetition number calculator 108-3 determines the number of times the image filtering processing is to be repeated, by referring to a number-of-repetitions table in the internal memory 120, based on the camera setting information and the image characteristic information acquired by the image information acquisition unit 108-2 (at processing step S103). A method for determining the number of repetitions will be described later.

The repetition number counter 108-4 counts the number of times the image filtering processing has been carried out, by performing addition to calculate the number of repetitions of the image filtering processing, each time the image filtering processing is performed (at processing step S104).

When the number of repetitions of the image filtering processing is determined, the pixel-of-interest selector 108-5 selects a pixel of interest from among pixels contained in the process-target image 31 (at processing step S105). A method which involves performing raster scanning to effect horizontal pixel-by-pixel movement and thereby select the pixel of interest, for example, may be adopted as a method for selecting the pixel of interest. Here, a scanning method is not limited to the above, and any method may be used.

After the pixel of interest has been determined, the similar pixel group extraction unit 108-6 extracts similar pixels from a region in the neighborhood of the pixel of interest (at processing step S106). One of employable method for extracting the similar pixels is a method which involves setting a window centered on the pixel of interest, and extracting a pixel such that an absolute value of a difference in signal value from the pixel of interest is equal to or less than a specific threshold value, for example.

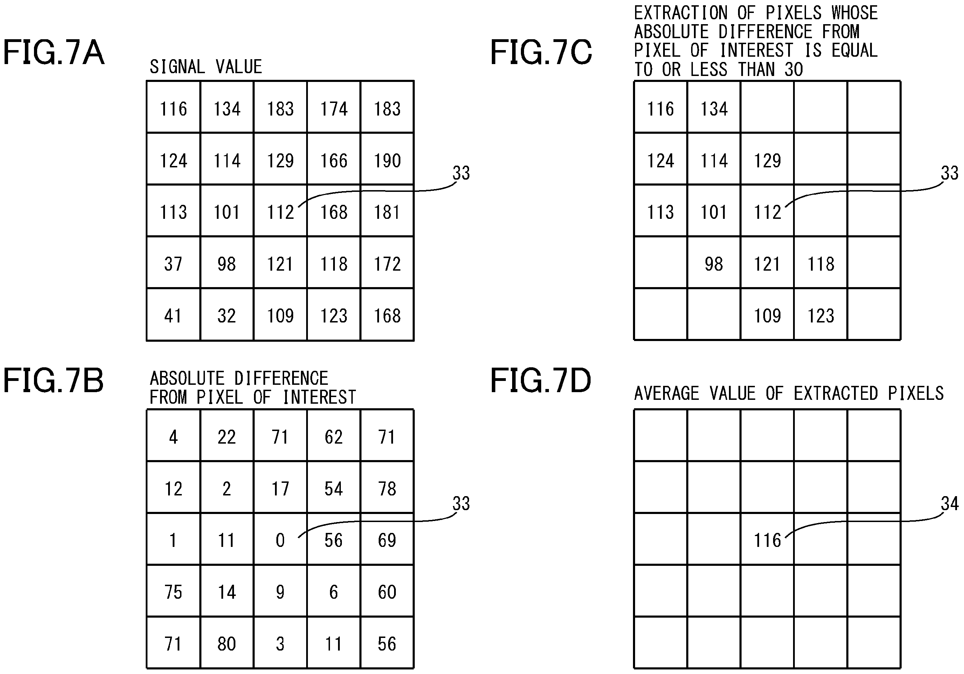

FIGS. 7A to 7D are illustrations of an example of the image filtering processing performed by the image processing apparatus 100. The similar pixel group extraction unit 108-6 determines a pixel 33 of interest with respect to signal values in a window with a 5 by 5 (5 × 5) matrix of pixels centered around the pixel of interest as illustrated for example in FIG. 7A. Then, absolute values of differences in pixel value between the pixel 33 of interest and its neighboring pixels are calculated as illustrated in FIG. 7B. After that, as illustrated in FIG. 7C, the similar pixel group extraction unit 108-6 extracts pixels within a threshold range as the similar pixels on condition that the values of the pixels be equal to or less than a predetermined threshold value (for example, their absolute difference values be equal to or less than 30). This manipulation enables avoiding the influence of the signal value in a portion in which the signal value changes sharply, such as an edge.

Incidentally, signal value similarity to the pixel of interest is not limited to the absolute value of the difference in signal value from the pixel of interest, and Euclidean distance in an RGB space or other various values may be used as reference values.

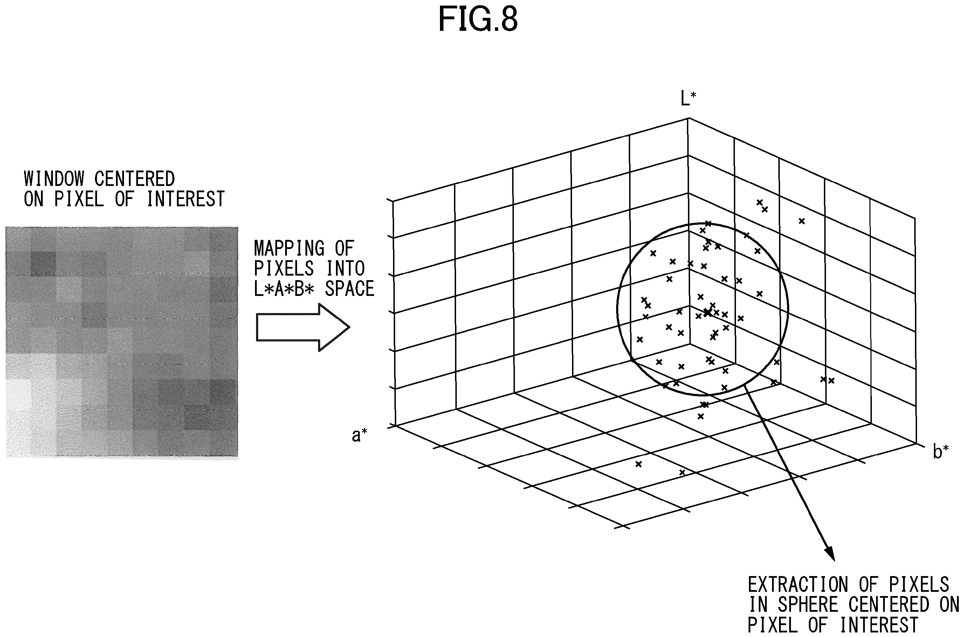

FIG. 8 is a schematic representation of assistance in explaining calculation of an average value and variance. As illustrated for example in FIG. 8, calculation of the similarity may be accomplished by mapping pixels in the window into an L*a*b* space, and using the Euclidean distance in the space for the calculation. Also, the numeric value of the similarity is not limited to the Euclidean distance, and an Lp norm may be used.

The average value calculator 108-7 calculates an average value 34 of the signal values (or three-dimensional vectors of RGB) as illustrated in FIG. 7D, for a similar pixel group extracted as illustrated in FIG. 7C (at processing step S107). The average value calculator 108-7 calculates the average value 34 to obtain a result of the filtering processing corresponding to the pixel of interest.

The pixel selection completion decision unit 108-8 determines whether or not all pixels in the process-target image 31 have been selected as the pixels of interest (at processing step S108). When a decision is made that all pixels have been selected, the processing goes to the next step. When a decision is made that all pixels have not been selected, the image processing apparatus 100 returns to processing step S105, and selects another pixel in the process-target image 31 as the pixel of interest and performs the processing of processing steps S105 to S107.

The repetition completion decision unit 108-9 determines whether the number counted by the repetition number counter 108-4 reaches the number of repetitions calculated by the repetition number calculator 108-3 (at processing step S109). When a decision is made that the counted number reaches the calculated number of repetitions, the processing goes to the next step. When a decision is made that the counted number does not reach the calculated number of repetitions, the processing returns to step S104, and the processing of steps S105 to S108 is repeated until the calculated number of repetitions is reached.

After the calculation of the average values for all pixels in the process-target image 31, the weight adder 108-10 performs weight addition of the average value and the pixel value for each of the pixels in the process-target image 31 (at processing step S110). When the weight addition is formulated, a corrected value x (RGB three-dimensional vectors) is calculated by Formula (1) by using a pixel value y (RGB three-dimensional vectors) of the process-target image 31, an average value $\mu$ (RGB three-dimensional vectors) of the similar pixel group, a weighting factor matrix W (a 3 by 3 (3 × 3) matrix), and a unit matrix I (a 3 by 3 (3 × 3) matrix).

[Formula 1]

$$ x \leftarrow W\mu + (I - W)y \qquad (1) $$

The corrected value x approaches the average value $\mu$ as diagonal elements of the weighting factor matrix W get closer to 1, while the corrected value x approaches the original pixel value y as the diagonal elements get closer to 0. When the value of W is set large (or close to 1) in a flat portion of the process-target image 31 or a portion thereof having a large amount of noise, the corrected value x approaches the average value $\mu$, so that a larger amount of noise can be reduced. Also, when the value of W is set small in a texture-containing portion of the process-target image 31 or a portion thereof having a small amount of noise, the corrected value x approaches the original pixel value y, so that fine signal components can be left. Using the weight addition as described above enables adaptive noise reduction according to characteristics of a local region.

Then, the weighting factor matrix W is calculated by Formula (2) by using noise variances $\tau_R^2$, $\tau_G^2$, $\tau_B^2$ for RGB, average values $\mu_R$, $\mu_G$, $\mu_B$ of the similar pixel group, and a designed parameter $\alpha$.

[Formula 2]

$$ W \leftarrow \alpha \begin{pmatrix} \dfrac{\tau_R^2}{\mu_R^2} & 0 & 0 \\ 0 & \dfrac{\tau_G^2}{\mu_G^2} & 0 \\ 0 & 0 & \dfrac{\tau_B^2}{\mu_B^2} \end{pmatrix} \qquad (2) $$

Certain designed values may be used as the noise variances $\tau_R^2$, $\tau_G^2$, $\tau_B^2$, or the noise variances may be estimated for each processing.

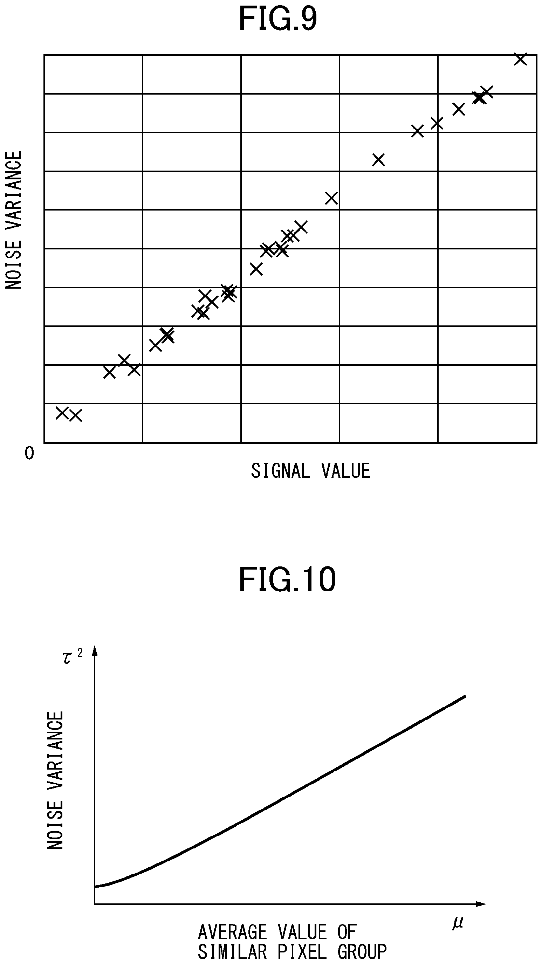

FIG. 9 is a graph illustrating the noise variance relative to the signal value (or the pixel value) in the above-described image filtering processing. Description will be given with regard to a method for estimating the noise variance $\tau^2$ in processing step S110. Generally, shot noise which appears in an image captured by a CCD, a CMOS or the like becomes larger in noise size as the signal value becomes larger. Thus, there is a high correlation between the signal value and the noise variance, and therefore, regression enables estimating the noise variance from the signal value with good accuracy. However, a true signal value cannot be seen from a noise-reduced image, and therefore, the average value $\mu$ of the similar pixel group is substituted for the true signal value.

FIG. 10 is a graph illustrating an estimation function of the amount of noise relative to the average value of the similar pixel group in the image filtering processing. In Example 1, such an estimation function is preset to estimate the

noise variance $\tau^2$ from the average value $\mu$.

Incidentally, the estimation function of the amount of noise may be packaged as a lookup table in the noise variance estimation function storage unit 41, or a function such as a polynomial may be prepared in the noise variance estimation function storage unit 41 and be calculated by the processor 104. The estimation function can be identified by utilizing a method of least squares or the like, for example by capturing an image of a color chart (e.g. Macbeth Color Checker or the like) and regarding variations in signal values in each color patch of the color chart as noise. In the case of a color image, the noise estimation functions for the noise variances $\tau_R^2$, $\tau_G^2$, $\tau_B^2$ are prepared for the RGB components, respectively.

Also, when the estimation function varies depending on shooting conditions, different functions may be prepared for use according to the shooting conditions. For example, the magnitude of noise varies depending on the ISO film speed, and therefore, switching may be done to select the estimation function to be used according to the set ISO film speed. In this case, it is desirable that plural types of estimation functions be held in the noise variance estimation function storage unit 41.

The corrected value replacement unit 108-11 replaces the pixel values in the process-target image 31 with the corrected values thereby to obtain the noise-reduced image 32, which is then outputted (at processing step S111). The output noise-reduced image 32 is stored in the SDRAM 103 or the memory card 192.

As described above, the image processing apparatus 100 can achieve noise reduction in the process-target image 31 as color image data at low processing cost without degradation in resolution of signal-dependent noise.

Incidentally, in the above Example 1, description has been given assuming that the process-target image 31 is the color image having the RGB components; however, the present invention may likewise be applied to a color image represented in any given color space such as a YCC or L*a*b* space. Also, the present invention may be applied to an n-band spectrographic image by regarding the signal value in Example 1 as an n-dimensional vector.

(Modification of Step S110)

Description will be given with regard to Modification of weight addition processing of processing step S110 in the above-described Example 1.

Although the weight addition in an RGB three-dimensional space has been described as an example of the weight addition processing in processing step S110 in the above-described Example 1, a difference between the average value and the process-target pixel value may be projected in a one-dimensional specific direction e to perform the weight addition.

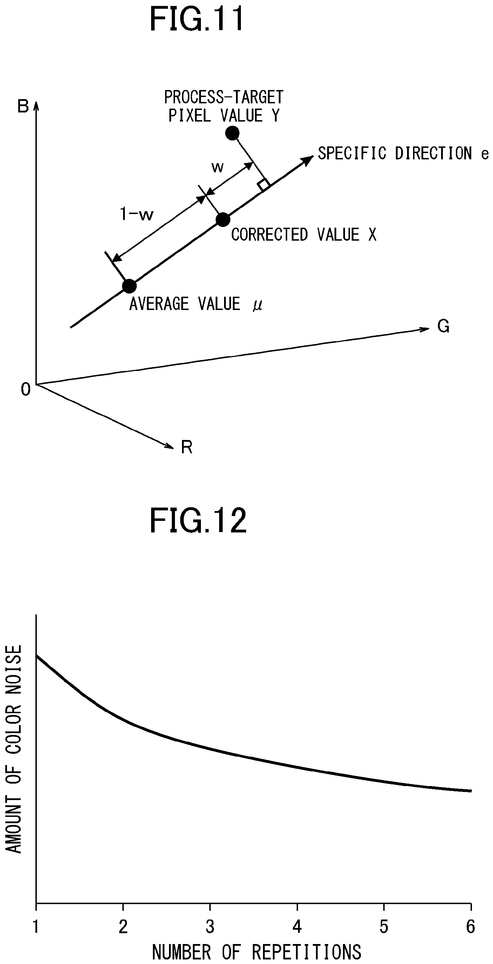

FIG. 11 is a representation illustrating an example in which the difference between the average value and the process-target pixel value is projected in the one-dimensional specific direction to perform the weight addition. Examples of the specific direction may include a certain direction of an RGB ratio of the average value of the similar pixel group, a direction of luminance, and a direction of maximum variance. Here, w denotes a weighting factor (scalar), and can be set as represented by Formula (3), for example.

[Formula 3]

$$w(p) \leftarrow \frac{\mu_R^2 \tau_R^2 + \mu_G^2 \tau_G^2 + \mu_B^2 \tau_B^2}{\mu_R^4 + \mu_G^4 + \mu_B^4} \qquad (3)$$

Computational complexity is reduced by one-dimensional projection, and also, noise in a direction orthogonal to the specific direction e can be forced to become 0 by projection in the specific direction e.

(Method for Calculating Image Specific Value)

Description will be given with regard to the method for calculating the image characteristic information from the process-target image 31 in processing step S102 in the above-described Example 1. The image characteristic information calculated from the process-target image 31 includes the luminance value and the standard deviation.

Calculation of a luminance value Y is performed for each of pixels contained in the process-target image 31, and the luminance value Y is calculated for the RGB signals by Formula (4).

[Formula 4]

$$Y = 0.299 \times R + 0.587 \times G + 0.114 \times B \qquad (4)$$

Also, calculation of a standard deviation σ is performed for the overall process-target image, and the standard deviation σ is calculated by Formula (5):
[Formula 5]

$$\sigma^2 \leftarrow \frac{1}{n} \sum_{i=1}^{n} (x_i - x)^2 \qquad (5)$$

where n denotes the number of pixels in the process-target image 31; xi, the amount of signal of the pixel of interest; and x, an average signal value. The calculation of the standard deviation can be performed by calculating the standard deviations for the luminance value and RGB, respectively. An average of the luminance values in the process-target image 31 is calculated and used.

(Processing for Determining Number of Repetitions)

Description will be given with regard to the processing for determining the number of repetitions, which is performed by the repetition number calculator 108-3, described for the above-mentioned processing step S103.
FIG. 12 is an example of a graph illustrating a relationship of the amount of noise to the number of repetitions of the image filtering processing in the noise reduction processing. As illustrated in FIG. 12, there is a tendency as given below: an increase in the number of repetitions leads to a reduction in the amount of color noise, and the amount of color noise reduction becomes gradually smaller as the number of repetitions increases. Description will be given with regard to the method for determining the number of repetitions of the image filtering processing having such characteristics.
As described above, in processing step S103, the repetition number calculator 108-3 calculates the number of repetitions, based on the image information acquired by the image information acquisition unit 108-2 and the number-of-repetitions table. The acquired image information includes the luminance, the standard deviation, the ISO film speed (or sensor gain), and the light source (WB). Description will be given below with regard to methods for determining the number of repetitions based on these information items, respectively.

(Method for Determining Number of Repetitions Based on Luminance Value)

Firstly, description will be given with regard to a method for determining the number of repetitions based on the luminance included in the image characteristic information. In image data, color noise is noticeable in a relatively dark region of an image.

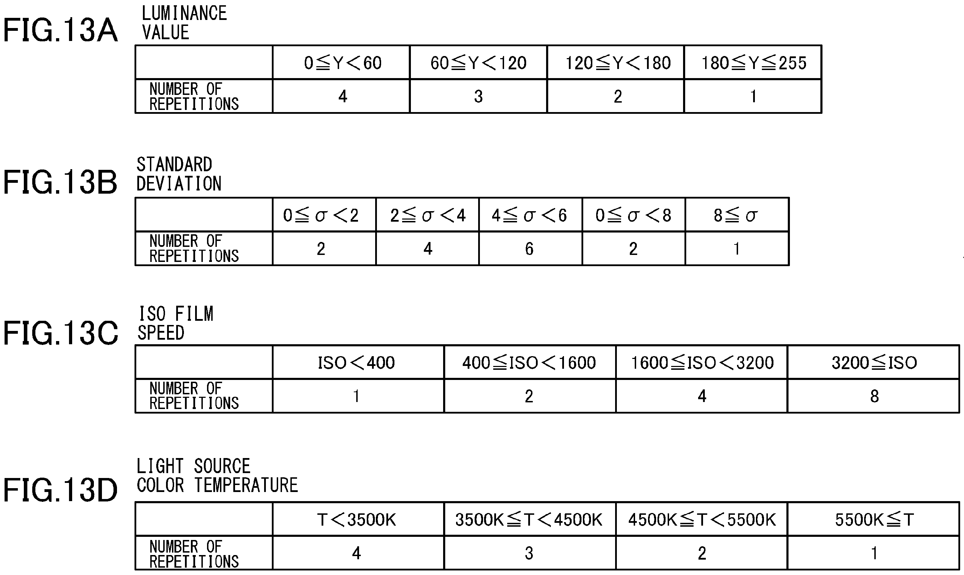

FIGS. 13A to 13D are tables illustrating examples of tables which determine the number of repetitions of the image filtering processing in the noise reduction processing by the image processing apparatus 100. FIG. 13A illustrates an example of the number-of-repetitions table based on the luminance value. For the processing for determining the number of repetitions, as illustrated in FIG. 13A, threshold values are preset for the luminance value, and the number of repetitions is set for each of regions delimited by the threshold values. For example, the setting of the number of repetitions is made so as to increase the number of repetitions for a low-luminance region where color noise is likely to be noticeable, and so as to reduce gradually the number of repetitions for mid- to high-luminance regions. The repetition number calculator 108-3 determines the number of repetitions by determining which luminance value region in the number-of-repetitions table the luminance information acquired from the process-target image 31 lies within.

(Method for Determining Number of Repetitions Based on Standard Deviation)

Description will be given with regard to a method for determining the number of repetitions based on the standard deviation. In this method, a threshold value is determined for the standard deviation calculated based on the image characteristic information, and the number of repetitions is preset in the table for the threshold value. The repetition number calculator 108-3 determines the number of repetitions by collating the calculated value with the threshold value in the table.
In determining the number of repetitions based on the standard deviation, there is a tendency as given below:

the standard deviation is high in a region having a large amount of noise, and the standard deviation is high also when many edges are contained.

Therefore, the setting of the number of repetitions needs care. Specifically, it is necessary that the setting of the number of repetitions be made so as not to increase the number of repetitions when the standard deviation is equal to or more than a certain value.

FIG. 13B illustrates an example of the number-of-repetitions table based on the standard deviation. In the number-of-repetitions table based on the standard deviation, the number of repetitions is set so as to increase toward a certain standard deviation region. Also, in the number-of-repetitions table based on the standard deviation, the number of repetitions is set so as to decrease beyond the certain standard deviation region, for the purpose of holding an edge.

(Method for Determining Number of Repetitions Based on ISO Film Speed (or Sensor Gain))

Description will be given with regard to a method for determining the number of repetitions based on the ISO film speed (or the sensor gain). Image data has a tendency to increase in noise as the ISO film speed becomes higher. Therefore, threshold values are set for the ISO film speed, and the number of repetitions is set for each of regions delimited by the threshold values.

FIG. 13C illustrates an example of the number-of-repetitions table based on the ISO film speed. In the number-of-repetitions table based on the ISO film speed, the number of repetitions is set so as to increase as the ISO film speed becomes higher, and so as to decrease gradually as the ISO film speed becomes lower.

(Method for Determining Number of Repetitions Based on Light Source Information)

Description will be given with regard to a method for determining the number of repetitions based on the light source information. In shooting under conditions of various light sources, under WB (White Balance) control, the amount of R signal and the amount of B signal are multiplied by gain so that the levels of the amount of R signal and the amount of B signal are adjusted to the level of the amount of G signal having the highest sensitivity, in order that a white subject appears in white color on image data. In other words, under the WB control, in the case of shooting under conditions of a light source having a low color temperature, there is a small amount of blue light, and therefore, B gain of WB has a high value, so that there is a large amount of blue color noise.

In the method for determining the number of repetitions based on the light source information, the light source information which can be acquired from an image includes WB gain, and WB information (e.g. an incandescent lamp, a fluorescent lamp, cloudy weather conditions, and the like). In the case of the WB gain, light source color temperature at the time of image capture can be estimated to some extent from R gain and B gain. In the case of the WB information, a decision is made based on a corresponding color temperature (for example, the incandescent lamp: 3000K, the fluorescent lamp: 4000K, the cloudy weather conditions: 6000K, and the like).

In determining the number of repetitions based on the light source information, threshold values are set for the estimated light source color temperature, and the number of repetitions is set for each of regions delimited by the threshold values.

FIG. 13D illustrates an example of the number-of-repetitions table based on the light source information. In the number-of-repetitions table based on the light source information, the number of repetitions is set so as to increase for low color temperature at which blue color noise is likely to be noticeable, and so as to decrease gradually as the color temperature becomes higher.

(Method for Determining Number of Repetitions by Combination of Plural Methods)

Rather than the method for determining the number of repetitions from each individual piece of information as described above, a combination of plural pieces of information enables determining the number of repetitions with higher accuracy. A method for determining the number of repetitions by a combination of the ISO film speed and the standard deviation will be described as an example of a method for determining the number of repetitions by the combination of the plural pieces of information.

When the processing of Example 1 is performed in the image capturing apparatus 1, there is a great likelihood that a single image sensor is used for image capture. Meanwhile, when the processing of Example 1 is performed by a PC (personal computer) or the like, there are plural image capturing apparatuses used for the image capture, and thus, various image sensors may be used for the image capture. Generally, the amount of noise which appears in image data is likely to result from the size of the image sensor, and the amount of noise becomes larger as the size of the image sensor becomes smaller. The image capturing apparatus generally can select the numeric value of the ISO film speed; however, even with the same ISO film speed, the amount of noise varies greatly according to the image sensor used for the image capture. In such a case, when the number of repetitions is determined based on the ISO film speed alone, excessive noise reduction processing may be performed on an image having a small amount of noise, or insufficient noise reduction processing may be performed on an image having a large amount of noise.

Therefore, the ISO film speed may be used additionally in combination with the standard deviation, as a method for determining the number of repetitions, which is preferred for the noise reduction processing of Example 1 to be performed outside the image capturing apparatus. According to such a method, the optimum number of repetitions for various image sensors can be determined.

Examples of a method for combining the methods for determining the number of repetitions include the following method. First, the number N1 of repetitions based on the ISO film speed is calculated from the ISO film speed acquired from an image, in accordance with FIG. 13C. Then, the number N2 of repetitions based on the standard deviation is calculated from the standard deviation acquired from the process-target image 31, in accordance with FIG. 13B.

After the calculation of the values N1 and N2, the number of repetitions of the image filtering processing is determined according to the predetermined order of priority of the values N1 and N2. For example, when the numbers of repetitions calculated from the ISO film speed and the standard deviation, respectively, have the following relationship: N1 is equal to or more than N2 (N1 $\geq$ N2), the number N2 of repetitions is used, while on the other hand, when N1 is less than N2 (N1 < N2), the number N1 of repetitions is used.

As an example, when the ISO film speed is ISO 1600 and the standard deviation $\sigma$ is 1.2, the number N1 of repetitions based on the ISO film speed is four and the number N2 of repetitions based on the standard deviation is two, and N1 and N2 have the following relationship: N1 is equal to or more than N2 (N1 $\geq$ N2), so that the number N2 of repetitions, i.e. "two times," is adopted.

According to the above-described determining method, the number of repetitions can be prevented from increasing for an image sensor which causes little noise.

Also, as another example, when the ISO film speed is ISO 1600 and the standard deviation $\sigma$ is 4.5, the number N1 of repetitions based on the ISO film speed is four and the number N2 of repetitions based on the standard deviation is six, and N1 and N2 have the following relationship: N1 is less than N2 (N1 < N2), so that the number N1 of repetitions, i.e. "four times," is adopted.

According to the above-described determining method, even when an edge is contained in the process-target image 31 and hence the standard deviation is high, the use of the number of repetitions based on the ISO film speed enables clipping the number of repetitions, thus increasing the number of repetitions, and thereby preventing the edge from becoming solid. Also, the setting of the number of repetitions may be made so that the maximum number of repetitions is set for the ISO film speed.

(Example 2 of Noise Reduction Processing)

In the above-described Example 1, description has been given with regard to the method in which the filtering processing is repeated an equal number of times on the process-target image 31 throughout its entire screen (or for all pixels contained in the process-target image 31). On the other hand, in Example 2, description will be given with regard to a method in which the process-target image 31 is divided into plural regions and the number of repetitions is changed for each of the regions.

Incidentally, in Example 2 described below, functional blocks and a processing flowchart are the same as those of Example 1. In the description of Example 2, therefore, the points of difference from Example 1 will be described with reference to FIGS. 5 and 6 and the like.

In processing step S102, the image information acquisition unit 108-2 acquires camera setting information at the time of image capture and image characteristic information from the process-target image 31 acquired by the image acquisition unit 108-1. The camera setting information at the time of image capture includes a focus point from which a focus position on the process-target image 31 can be seen, and aperture stop setting, as information for use in Example 2, in addition to the ISO film speed and the light source information (including WB), as in the case of Example 1.

The image characteristic information is obtained by calculating the luminance value and the standard deviation from the image, as in the case of Example 1; however, in Example 2, a region from which the image characteristic information is calculated is different from that in Example 1.

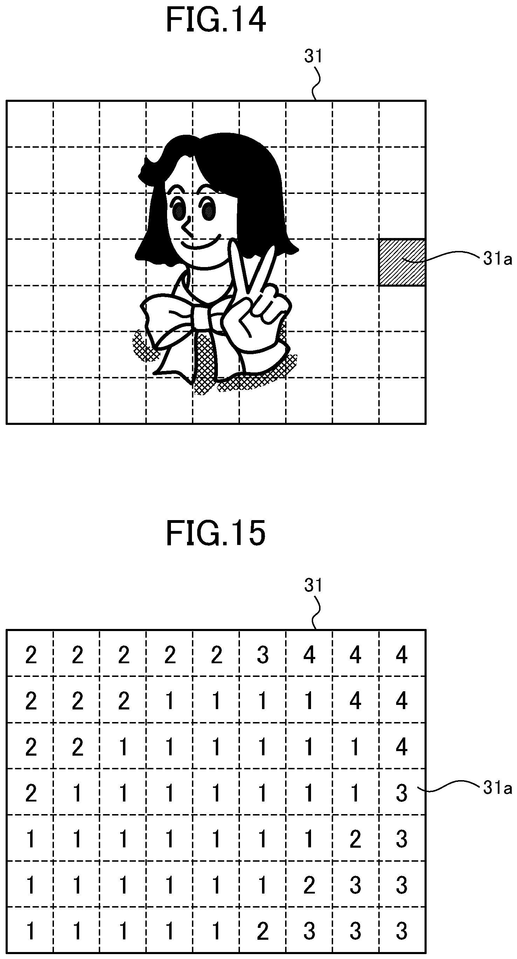

FIG. 14 is an illustration of an example of division of the process-target image 31 into regions in the noise reduction processing. As illustrated in FIG. 14, the process-target image 31 is divided into process-target regions 31a in any given number and size in its horizontal and vertical directions, and the image characteristic information is calculated for each of the process-target regions 31a.

As for processing step S103, in Example 1, the repetition number calculator 108-3 determines the number of times the processing of processing steps S105 to S108 is to be repeated. On the other hand, in Example 2, the number of repetitions is calculated for each of the process-target regions. A method for determining the number of repetitions for each of the process-target regions will be described later.

As for processing step S104, in Example 1, the number of repetitions is incremented and counted each time the image filtering processing is performed, in order to count the number of times the processing of steps S105 to S108 has been carried out. On the other hand, in Example 2, the number of repetitions is counted for each of the regions.

As for processing step S109, in Example 2, the repetition completion decision unit 108-9 determines whether the number counted by the repetition number counter 108-4 reaches the number of repetitions calculated for each of the regions by the repetition number calculator 108-3. Then, when a decision is made that the counted number reaches a predetermined number of repetitions for each of the process-target regions, the processing goes to the next step. Meanwhile, when a decision is made that the counted number does not reach the predetermined number of repetitions, the processing returns to step S104.

(Method for Determining Number of Repetitions for Each of Regions)

Description will be given with regard to the method for determining the number of repetitions of the image filtering processing for each of the process-target regions in Example 2.

FIG. 15 is an illustration of an example of the number of repetitions for each of the regions of the process-target image 31 as divided into the regions. In FIG. 15, numeric values entered in the process-target regions 31a of the process-target image 31 indicate the numbers of repetitions for the process-target regions 31a, respectively. According to Example 2, as described above, the different numbers of repetitions are determined for the process-target regions 31a, respectively, into which the process-target image 31 is divided.

As for the method for determining the number of repetitions of the image filtering processing, Example 2 is different from Example 1 in that the determining method based on the luminance value or the standard deviation involves making a decision based on the image characteristic information for each of the process-target regions, and determining the number of repetitions for each of the regions.

Also, as for the method for determining the number of repetitions based on the ISO film speed (or the sensor gain) or the light source (WB) information, when different information is obtained for each of the process-target regions, the method of Example 1 may be performed for each of the regions to determine the number of repetitions for each of the regions.

(Method for Determining Number of Repetitions Based on Focus Point)

Next, description will be given with regard to a method for determining the number of repetitions of the image filtering processing, based on focus point information. The focus point information is information indicating which portion of a captured image is in focus. A region which is in focus has the highest high-frequency component, and a region goes out of focus as it is farther away from the focus point, and thus the high-frequency component becomes low and, therefore, blur occurs in image data.

In Example 2, a distance d between the focus point and the process-target region is calculated from the focus point information. Then, threshold values are set for the calculated distance from the focus point, and the number of repetitions is set for each of regions delimited by the threshold values.

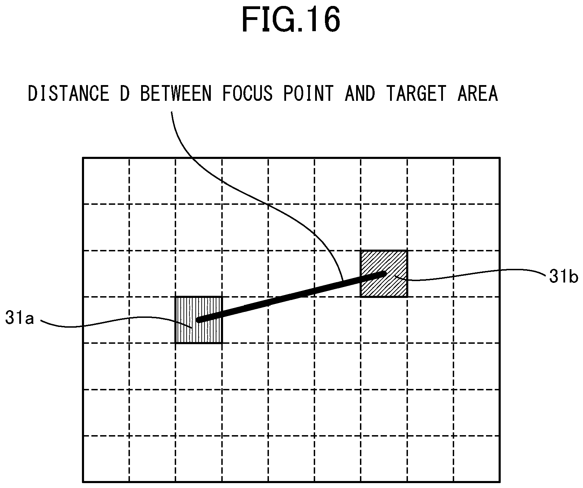

FIG. 16 is an illustration of an example of measurement of the distance between the focus point and the process-target region in the noise reduction processing using the division into the regions. The distance d between the process-target region 31a of the process-target image 31 and a focus point 31b is calculated by Formula (6):

[Formula 6]

$$d \leftarrow \sqrt{(h * hsub)^2 + (v * vsub)^2} \qquad (6)$$

where h denotes the number of horizontal pixels per block; v, the number of vertical pixels per block; hsub, a horizontal block difference between the focus point and the target area; and vsub, a vertical block difference between the focus point and the target area.

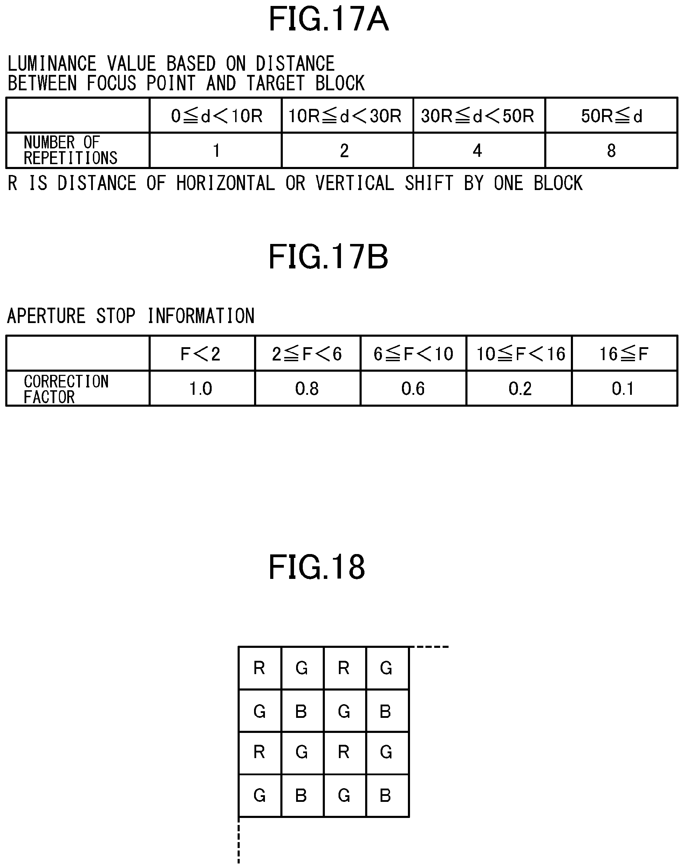

FIGS. 17A and 17B are tables illustrating examples of tables which determine the number of repetitions of the image filtering processing using the division into the regions. As illustrated in FIG. 17A, the high-frequency component is high in a region close to the focus point, and therefore, for this region, the number of repetitions is set small so that resolution remains as it is. Meanwhile, a region far away from the focus point is a blurred region, and therefore, for this region, the number of repetitions is set large so as to reduce noise. Also, when plural focus points are present, the distance from the focus point closest to the process-target region is calculated and used.

(Method for Determining Number of Repetitions Based on Aperture Stop Setting)

Next, description will be given with regard to a method for determining the number of repetitions of the image filtering processing, based on the aperture stop setting. The amount of blur in an image is affected greatly by the influence of the aperture stop setting. Specifically, when the aperture stop of the image capturing apparatus is open, a depth of field becomes shallow and thus the amount of blur becomes large, while on the other hand, when the aperture stop is stopped down, the depth of field becomes deep and thus the amount of blur becomes small.

In Example 2, therefore, aperture stop information acquired from image data is utilized, and thereby, the number of repetitions can be effectively increased for a blurred region of the image data.

As illustrated for example in FIG. 17B, threshold values are set for the aperture stop setting, and a correction factor is set for each of regions delimited by the threshold values. The correction factor is set so as to approach 1 as the aperture stop setting becomes smaller, and so as to approach 0 as the aperture stop setting becomes larger.

Then, the repetition number calculator 108-3 calculates the number of repetitions by multiplying the number of repetitions calculated from the distance d between the focus point and the process-target region by the correction factor calculated from the aperture stop information.

As for the method for determining the number of repetitions based on the distance from the focus point and the aperture stop information, for example when the distance d between the focus point and the process-target region is 40R (where R denotes a distance of horizontal or vertical shift by one block) and the aperture stop is of f4.0, the number of repetitions is calculated from the distance d in accordance with FIG. 17A thereby to obtain "four times," and the correction factor is calculated from the aperture stop setting in accordance with FIG. 17B thereby to obtain "a correction factor of 0.8."

Calculating the number of repetitions for the process-target region from the above numeric values leads to 3.2 (= 4 $\times$ 0.8), which is then treated as "three times" for example by being rounded off.

According to the above-described method for determining the number of repetitions, under conditions where the aperture stop is stopped down, the amount of blur becomes small and thus the number of repetitions can be reduced, while under conditions where the aperture stop is open, the amount of blur becomes large and thus the number of repetitions can be increased.

(Application of the Present Invention to Bayer Pattern)

The noise reduction processing of Example 2 described above may be applied to image data of a Bayer pattern type. FIG. 18 is an illustration of an example of a Bayer pattern. To perform the noise reduction processing on the image data of the Bayer pattern type, demosaicing is performed on the data of the Bayer pattern type to convert the data into an RGB image, and thereby, the processing becomes applicable.

(Effects of Examples)

According to the noise reduction processing performed by the image processing apparatus of Examples described above, the following effects can be achieved.

In the image processing apparatuses of Examples 1 and 2, in the noise reduction processing, the number of repetitions of the image filtering processing is determined under predetermined conditions, and the image filtering processing is performed based on the determined number of repetitions. Performing the image filtering processing plural times enables eliminating noise having a small signal difference between the pixel of interest and the similar pixel, such as color noise, which has heretofore been difficult to eliminate.

Also, in the image processing apparatuses of Examples 1 and 2, the number of repetitions of the image filtering processing is determined based on the predetermined conditions, thereby enabling effective elimination of noise having a small signal difference between the pixel of interest and the similar pixel, such as color noise, without degradation of resolution.

Also, in the image processing apparatuses of Examples 1 and 2, as a result of the image filtering processing, the average value of the signal values of the pixels is calculated from the pixel of interest and the similar pixel group, of the extracted pixels. Then, in the image processing apparatuses of Examples 1 and 2, the image filtering processing using the average value is performed plural times. According to the image processing apparatuses of Examples 1 and 2 as described above, it is possible to effectively eliminate noise having a small signal difference between the pixel of interest and the similar pixel, such as color noise, without degradation of resolution.

In the image processing apparatus of Example 2, the process-target image is horizontally and vertically divided into any number of blocks, and the number of repetitions of the image filtering processing is changed based on predetermined conditions for each of the image processing regions divided into the block.

According to the image processing apparatus of Example 2, the number of repetitions of the image filtering processing is increased for a region where noise is to be reduced, and the number of repetitions of the image filtering processing is reduced for a region where resolution is to be left, and thus, the noise reduction processing can be effectively performed according to the region.

In the image processing apparatuses of Examples 1 and 2, the subject luminance is used as the predetermined condition for determining the number of repetitions, and the number of repetitions of the image filtering processing is determined according to the subject luminance.

According to the image processing apparatuses of Examples 1 and 2, the number of repetitions of the image filtering processing for a dark portion can be increased for color noise which is likely to appear particularly in the dark portion, and thus, the color noise can be effectively eliminated.

In the image processing apparatuses of Examples 1 and 2, the ISO film speed (gain) setting of the image sensor is used as the predetermined condition for determining the number of repetitions, and the number of repetitions of the image filtering processing is determined according to the ISO film speed setting of the image sensor.

In image data, color noise is more likely to appear as the gain setting of the image sensor becomes higher. However, according to the image processing apparatuses of Examples 1 and 2, the number of repetitions of the image filtering processing can be increased for such color noise according to the gain setting of the image sensor, and thus, the color noise can be effectively eliminated.

In the image processing apparatuses of Examples 1 and 2, the standard deviation calculated from the image is used as the predetermined condition for determining the number of repetitions, and the number of repetitions of the image filtering processing is determined according to the standard deviation.

In image data, when color noise appears, the standard deviation tends to become higher. Therefore, according to the image processing apparatuses of Examples 1 and 2, the number of repetitions of the image filtering processing can be increased for adaptation to the standard deviation becoming higher, and thus, the color noise can be effectively eliminated.

Further, also in image data containing an edge, the standard deviation tends to become higher. However, in the image processing apparatuses of Examples 1 and 2, when the standard deviation is equal to or more than a certain value, the number of repetitions of the image filtering processing is set so as not to increase. Thus, according to the image processing apparatuses of Examples 1 and 2, the edge can also be prevented from becoming deformed.

In the image processing apparatuses of Examples 1 and 2, the light source color temperature at the time of image capture is used as the predetermined condition for the number of repetitions, and the number of repetitions of the image filtering processing is determined according to the light source color temperature.

In image data, image capture at low color temperature leads to a small amount of blue light and thus to an increase in the B gain of the white balance, and thus, color noise is likely to appear. According to the image processing apparatuses of Examples 1 and 2, when the light source color temperature is low, the number of repetitions of the image filtering processing can be increased, and thus, the color noise can be effectively eliminated.

In the image processing apparatus of Example 2, the predetermined condition for determining the number of repetitions is set based on the focus point at the time of image capture, and the number of repetitions of the image filtering processing is determined based on the focus point.

In image data, blur occurs in a region which is out of the focus point, and thus, even if the resolution is lost by the image filtering processing, this has little influence on evaluation of the image data. Therefore, according to the image processing apparatus of Example 2, the number of repetitions of the image filtering processing can be increased, and thus, the color noise can be eliminated.

In the image processing apparatus of Example 2, the aperture stop information at the time of image capture is used as the predetermined condition for determining the number of repetitions, and the number of repetitions of the image filtering processing is determined according to the aperture stop information.

According to the image processing apparatus of Example 2, the aperture stop information is utilized in combination with the above-described method for determining the number of repetitions based on the focus point, and thereby, a portion of image data in which blur occurs can be determined with accuracy. Thus, according to the image processing apparatus of Example 2, the image filtering processing can be effectively performed on a region on image data where blur occurs.

According to the embodiments of the present invention, it is possible to achieve efficient noise elimination of even wide-range noise having a small signal difference between a pixel of interest and neighboring pixels.

The invention and its embodiments are not limited to the examples described in this specification but may vary within the scope of the appended claims. A combination of different conditions and information can be used to set the number of repetitions.

**Claims**

1. An image processing apparatus (100) comprising:

a filtering unit (109) configured to extract a pixel having a high similarity to a pixel of interest (33) by comparing signal values of the pixel of interest (33) and its neighboring pixels in a process-target area containing the pixel of interest (33) in a process-target image (31), and perform operations for filtering processing by using the extracted pixel; and

a processing-repetition number decision unit (110) configured to determine the number of repetitions of the filtering processing based on a predetermined condition held by a process-target pixel or the process-target area, the filtering processing being repeated while setting a result of the filtering processing obtained by the filtering unit (109) as a new signal value of the pixel of interest (33);

wherein the processing-repetition number decision unit (110) is configured to determine the number of repetitions of the filtering processing based on a distance between a focus point of the process-target image (31) and the process-target area.

2. The image processing apparatus (100) according to claim 1, wherein
the filtering unit (109) is configured to perform the operations for the filtering processing based on the number of repetitions determined by the processing-repetition number decision unit (110).

3. The image processing apparatus (100) according to any one of claims 1 and 2, wherein
the filtering unit (109) is configured to calculate an average value of the signal values of the extracted pixels as the result of the filtering processing.

4. The image processing apparatus (100) according to any one of claims 1 to 3, wherein
the processing-repetition number decision unit (110) is configured to divide the process-target image (31) into a plurality of process-target areas, and to determine the number of repetitions of the filtering processing for each of the divided process-target areas.

5. The image processing apparatus (100) according to any one of claims 1 to 4, wherein
the processing-repetition number decision unit (110) is configured to use subject brightness as the predetermined condition, and to increase the number of repetitions of the filtering processing as the subject brightness becomes lower.

6. The image processing apparatus (100) according to any one of claims 1 to 5, wherein
the processing-repetition number decision unit (110) is configured to use gain setting of an image sensor as the predetermined condition, and to increase the number of repetitions of the filtering processing as the gain setting becomes higher.

7. The image processing apparatus (100) according to any one of claims 1 to 6, wherein
the processing-repetition number decision unit (110) is configured to use a standard deviation calculated from the image as the predetermined condition.

8. The image processing apparatus (100) according to any one of claims 1 to 7, wherein
the processing-repetition number decision unit (110) is configured to use light source color temperature at the time of image capture as the predetermined condition, and to increase the number of repetitions of the filtering processing as the light source color temperature becomes lower.

9. The image processing apparatus (100) according to any one of claims 1 to 8, wherein
the processing-repetition number decision unit (110) is configured to determine the number of repetitions of the filtering processing based on aperture stop information on the process-target image (31).

**Patentansprüche**

1. Bildverarbeitungsvorrichtung (100), umfassend:

eine Filtereinheit (109), die konfiguriert ist, ein Pixel mit einer hohen Ähnlichkeit zu einem Pixel von Interesse (33) durch Vergleichen von Signalwerten des Pixels von Interesse (33) und seiner benachbarten Pixel in einem Verarbeitungszielbereich, der das Pixel von Interesse (33) in einem Verarbeitungszielbild (31) enthält, zu extrahieren und Vorgänge zur Filterverarbeitung durch Verwenden des extrahierten Pixels durchzuführen; und eine Verarbeitungswiederholungsanzahlentscheidungseinheit (110), die konfiguriert ist, die Anzahl von Wiederholungen der Filterverarbeitung auf Grundlage einer vorbestimmten Bedingung, die von einem Verarbeitungszielpixel oder dem Verarbeitungszielbereich gehalten wird, zu bestimmen, wobei die Filterverarbeitung wiederholt wird, während ein Ergebnis der Filterverarbeitung, das durch die Filtereinheit (109) erhalten wird, als ein neuer Signalwert des Pixels von Interesse (33) festgelegt wird; wobei die Verarbeitungswiederholungsanzahlentscheidungseinheit (110) konfiguriert ist, die Anzahl von Wiederholungen der Filterverarbeitung auf Grundlage eines Abstands zwischen einem Fokuspunkt des Verarbeitungszielbilds (31) und dem Verarbeitungszielbereich zu bestimmen.

2. Bildverarbeitungsvorrichtung (100) nach Anspruch 1, wobei
die Filtereinheit (109) konfiguriert ist, die Vorgänge zur Filterverarbeitung auf Grundlage der Anzahl von Wiederholungen, die durch die Verarbeitungswiederholungsanzahlentscheidungseinheit (110) bestimmt wird, durchzuführen.

3. Bildverarbeitungsvorrichtung (100) nach einem der Ansprüche 1 und 2, wobei
die Filtereinheit (109) konfiguriert ist, einen Durchschnittswert der Signalwerte der extrahierten Pixel infolge der Filterverarbeitung zu berechnen.

4. Bildverarbeitungsvorrichtung (100) nach einem der Ansprüche 1 bis 3, wobei
die Verarbeitungswiederholungsanzahlentscheidungseinheit (110) konfiguriert ist, das Verarbeitungszielbild (31) in eine Vielzahl von Verarbeitungszielbereiche aufzuteilen und die Anzahl von Wiederholungen der Filterverarbeitung für jeden der aufgeteilten Verarbeitungszielbereiche zu bestimmen.

5. Bildverarbeitungsvorrichtung (100) nach einem der Ansprüche 1 bis 4, wobei
die Verarbeitungswiederholungsanzahlentscheidungseinheit (110) konfiguriert ist, Motivhelligkeit als die vorbestimmte Bedingung zu verwenden und die Anzahl von Wiederholungen der Filterverarbeitung zu erhöhen, wenn die Motivhelligkeit niedriger wird.

6. Bildverarbeitungsvorrichtung (100) nach einem der Ansprüche 1 bis 5, wobei
die Verarbeitungswiederholungsanzahlentscheidungseinheit (110) konfiguriert ist, Verstärkungseinstellung eines Bildsensors als die vorbestimmte Bedingung zu verwenden und die Anzahl von Wiederholungen der Filterverarbeitung zu erhöhen, wenn die Verstärkungseinstellung höher wird.

7. Bildverarbeitungsvorrichtung (100) nach einem der Ansprüche 1 bis 6, wobei
die Verarbeitungswiederholungsanzahlentscheidungseinheit (110) konfiguriert ist, eine Standardabweichung, die aus dem Bild berechnet ist, als die vorbestimmte Bedingung zu verwenden.

8. Bildverarbeitungsvorrichtung (100) nach einem der Ansprüche 1 bis 7, wobei
die Verarbeitungswiederholungsanzahlentscheidungseinheit (110) konfiguriert ist, Lichtquellenfarbtemperatur zur Zeit der Bildaufnahme als die vorbestimmte Bedingung zu verwenden und die Anzahl von Wiederholungen der Filterverarbeitung zu erhöhen, wenn die Lichtquellenfarbtemperatur niedriger wird.

9. Bildverarbeitungsvorrichtung (100) nach einem der Ansprüche 1 bis 8, wobei
die Verarbeitungswiederholungsanzahlentscheidungseinheit (110) konfiguriert ist, die Anzahl von Wiederholungen der Filterverarbeitung auf Grundlage von Aperturblendeninformationen an dem Verarbeitungsbild (31) zu bestimmen.

**Revendications**

1. Appareil de traitement d'image (100) comprenant :

une unité de filtrage (109) conçue pour extraire un pixel présentant une similitude élevée à un pixel d'intérêt (33) par comparaison de valeurs de signal du pixel d'intérêt (33) et de ses pixels voisins dans une zone de cible de traitement contenant le pixel d'intérêt (33) dans une image de cible de traitement (31), et effectuer des opérations permettant le filtrage d'un traitement à l'aide du pixel extrait ; et

une unité de décision du nombre de répétitions de traitement (110) conçue pour déterminer le nombre de répétitions du traitement de filtrage en fonction d'une condition prédéterminée contenue par un pixel de cible de traitement ou la zone de cible de traitement, le traitement de filtrage étant répété tout en définissant un résultat du traitement de filtrage obtenu par l'unité de filtrage (109) comme nouvelle valeur de signal du pixel d'intérêt (33);

l'unité de décision du nombre de répétitions de traitement (110) étant conçue pour déterminer le nombre de répétitions du traitement de filtrage en fonction d'une distance entre un point de focalisation de l'image de cible de traitement (31) et la zone de cible de traitement.

2. Appareil de traitement d'image (100) selon la revendication 1, dans lequel
l'unité de filtrage (109) est conçue pour effectuer les opérations pour le traitement de filtrage en fonction du nombre de répétitions déterminé par l'unité de décision du nombre de répétitions de traitement (110).

3. Appareil de traitement d'image (100) selon l'une quelconque des revendications 1 et 2, dans lequel
l'unité de filtrage (109) est conçue pour calculer une valeur moyenne des valeurs de signal des pixels extraits comme résultat du traitement de filtrage.

4. Appareil de traitement d'image (100) selon l'une quelconque des revendications 1 à 3, dans lequel
l'unité de décision du nombre de répétitions de traitement (110) est conçue pour diviser l'image de cible de traitement (31) en une pluralité de zones de cible de traitement, et pour déterminer le nombre de répétitions du traitement de filtrage pour chacune des zones de cible de traitement divisées.

5. Appareil de traitement d'image (100) selon l'une quelconque des revendications 1 à 4, dans lequel
l'unité de décision du nombre de répétitions de traitement (110) est conçue pour utiliser une luminosité de sujet comme condition prédéterminée, et pour augmenter le nombre de répétitions du traitement de filtrage à mesure que la luminosité du sujet s'affaiblit.

6. Appareil de traitement d'image (100) selon l'une quelconque des revendications 1 à 5, dans lequel
l'unité de décision du nombre de répétitions de traitement (110) est conçue pour utiliser un réglage de gain d'un capteur d'image comme condition prédéterminée, et pour augmenter le nombre de répétitions du traitement de filtrage à mesure que le réglage de gain devient plus élevé.

7. Appareil de traitement d'image (100) selon l'une quelconque des revendications 1 à 6, dans lequel
l'unité de décision du nombre de répétitions de traitement (110) est conçue pour utiliser un écart type calculé à partir de l'image comme condition prédéterminée.

8. Appareil de traitement d'image (100) selon l'une quelconque des revendications 1 à 7, dans lequel
l'unité de décision du nombre de répétitions de traitement (110) est conçue pour utiliser une température de couleur de source de lumière au moment d'une capture d'image comme condition prédéterminée, et pour augmenter le nombre de répétitions du traitement de filtrage à mesure que la température de couleur de source de lumière s'affaiblit.

9. Appareil de traitement d'image (100) selon l'une quelconque des revendications 1 à 8, dans lequel
l'unité de décision du nombre de répétitions de traitement (110) est conçue pour déterminer le nombre de répétitions du traitement de filtrage en fonction d'informations d'arrêt d'ouverture sur l'image de cible de traitement (31).

# FIG.1

# FIG.2

# FIG.3

# FIG.4

LENS BARREL UNIT 7

ZOOM OPTICS 7-1   FOCUS OPTICS 7-2   APERTURE STOP UNIT 7-3   MECHANICAL SHUTTER UNIT 7-4

ZOOM LENS 7-1a   FOCUS LENS 7-2a   APERTURE STOP 7-3a   MECHANICAL SHUTTER 7-4a

ZOOM MOTOR   FOCUS MOTOR   APERTURE STOP MOTOR   MECHANICAL SHUTTER MOTOR

7-1b   7-2b   7-3b   7-4b

7-5 — MOTOR DRIVER

F/E-IC 102

102-1   102-2   102-3

CCD → CDS → AGC → A/D

101

102-4 — TG

VD AND HD SIGNALS

DIGITAL STILL CAMERA PROCESSOR 104

SDRAM 103
RAW-RGB IMAGE DATA | YUV IMAGE DATA | JPEG IMAGE DATA

122

104-1
CCD-1 SIGNAL PROCESSING BLOCK

USB BLOCK — 104-5 — USB CONNECTOR

SERIAL BLOCK — SERIAL DRIVER CIRCUIT 123-1 — RS-232C CONNECTER 123-2

104-6
JPEG CODEC BLOCK — 104-7

104-2
CCD-2 SIGNAL PROCESSING BLOCK

104-8
RESIZE BLOCK — LCD DRIVER 117 — LCD MONITOR 10

104-9
TV SIGNAL DISPLAY BLOCK — VIDEO AMP 118 — VIDEO JACK 119

CPU BLOCK
104-3

104-10
MEMORY CARD CONTROLLER BLOCK — MEMORY CARD SLOT 121 — MEMORY CARD 192

LOCAL SRAM
104-4

107 — RAM

INTERNAL MEMORY — 120

ROM 108
NOISE REDUCTION PROGRAM 20
109 — FILTERING UNIT   PROCESSING-REPETITION NUMBER DECISION UNIT — 110

EP 2 632 146 B1

19

# FIG. 5

31

PROCESS-TARGET
IMAGE

100

| 108-1 | IMAGE ACQUISITION UNIT |
| 108-2 | IMAGE INFORMATION ACQUISITION UNIT |
| 108-3 | REPETITION NUMBER CALCULATOR |
| 108-4 | REPETITION NUMBER COUNTER |
| 108-5 | PIXEL-OF-INTEREST SELECTOR |
| 108-6 | SIMILAR PIXEL GROUP EXTRACTION UNIT |
| 108-7 | AVERAGE VALUE CALCULATOR |
| 108-8 | PIXEL SELECTION COMPLETION DECISION UNIT |
| 108-9 | REPETITION COMPLETION DECISION UNIT |
| 108-10 | WEIGHT ADDER |
| 108-11 | CORRECTED VALUE REPLACEMENT UNIT |

51

CAMERA SETTING
INFORMATION STORAGE
UNIT

41

NOISE VARIANCE
ESTIMATION FUNCTION
STORAGE UNIT

32

NOISE-REDUCED
IMAGE

# FIG.6

```
                    START

S101
         IMAGE ACQUISITION

S102
        IMAGE INFORMATION
           ACQUISITION

S103
        DETERMINATION OF
      NUMBER OF REPETITIONS

S104
       COUNTING OF NUMBER OF
       REPETITIONS

S105
       SELECTION OF PIXEL OF
       INTEREST

S106
       SIMILAR PIXEL GROUP
       EXTRACTION

S107
       AVERAGE VALUE
       CALCULATION

S108
         HAVE ALL PIXELS        NO
         BEEN SELECTED?

                  YES

S109
          IS REPETITION         NO
          COMPLETED?

                  YES
S110
         WEIGHT ADDITION

S111
        CORRECTED VALUE
        REPLACEMENT

                    END
```

EP 2 632 146 B1

# FIG.7A

SIGNAL VALUE

| 116 | 134 | 183 | 174 | 183 |
|-----|-----|-----|-----|-----|
| 124 | 114 | 129 | 166 | 190 |
| 113 | 101 | 112 | 168 | 181 |
| 37 | 98 | 121 | 118 | 172 |
| 41 | 32 | 109 | 123 | 168 |

33

# FIG.7C

EXTRACTION OF PIXELS WHOSE ABSOLUTE DIFFERENCE FROM PIXEL OF INTEREST IS EQUAL TO OR LESS THAN 30

| 116 | 134 | | | |
|-----|-----|-----|-----|-----|
| 124 | 114 | 129 | | |
| 113 | 101 | 112 | | |
| | 98 | 121 | 118 | |
| | | 109 | 123 | |

33

# FIG.7B

ABSOLUTE DIFFERENCE FROM PIXEL OF INTEREST

| 4 | 22 | 71 | 62 | 71 |
|----|----|----|----|----|
| 12 | 2 | 17 | 54 | 78 |
| 1 | 11 | 0 | 56 | 69 |
| 75 | 14 | 9 | 6 | 60 |
| 71 | 80 | 3 | 11 | 56 |

33

# FIG.7D

AVERAGE VALUE OF EXTRACTED PIXELS

| | | | | |
|---|---|---|---|---|
| | | | | |
| | | 116 | | |
| | | | | |
| | | | | |

34

# FIG.8

WINDOW CENTERED
ON PIXEL OF INTEREST

MAPPING OF
PIXELS INTO
L*A*B* SPACE

L*

a*

b*

EXTRACTION OF PIXELS
IN SPHERE CENTERED ON
PIXEL OF INTEREST

EP 2 632 146 B1

# FIG.9

NOISE VARIANCE

SIGNAL VALUE

# FIG.10

$\tau^2$

NOISE VARIANCE

$\mu$

AVERAGE VALUE OF
SIMILAR PIXEL GROUP

24

# FIG.11

PROCESS-TARGET
PIXEL VALUE Y

SPECIFIC DIRECTION e

w

1-w

CORRECTED VALUE X

AVERAGE VALUE $\mu$

B

G

0

R

# FIG.12

AMOUNT OF COLOR NOISE

NUMBER OF REPETITIONS

1    2    3    4    5    6

## FIG.13A

LUMINANCE VALUE

| | $0 \leqq Y < 60$ | $60 \leqq Y < 120$ | $120 \leqq Y < 180$ | $180 \leqq Y \leqq 255$ |
|---|---|---|---|---|
| NUMBER OF REPETITIONS | 4 | 3 | 2 | 1 |

## FIG.13B

STANDARD DEVIATION

| | $0 \leqq \sigma < 2$ | $2 \leqq \sigma < 4$ | $4 \leqq \sigma < 6$ | $0 \leqq \sigma < 8$ | $8 \leqq \sigma$ |
|---|---|---|---|---|---|
| NUMBER OF REPETITIONS | 2 | 4 | 6 | 2 | 1 |

## FIG.13C

ISO FILM SPEED

| | $ISO < 400$ | $400 \leqq ISO < 1600$ | $1600 \leqq ISO < 3200$ | $3200 \leqq ISO$ |
|---|---|---|---|---|
| NUMBER OF REPETITIONS | 1 | 2 | 4 | 8 |

## FIG.13D

LIGHT SOURCE COLOR TEMPERATURE

| | $T < 3500K$ | $3500K \leqq T < 4500K$ | $4500K \leqq T < 5500K$ | $5500K \leqq T$ |
|---|---|---|---|---|
| NUMBER OF REPETITIONS | 4 | 3 | 2 | 1 |

EP 2 632 146 B1

# FIG.14

31

31a

# FIG.15

31

| 2 | 2 | 2 | 2 | 2 | 3 | 4 | 4 | 4 |
|---|---|---|---|---|---|---|---|---|
| 2 | 2 | 2 | 1 | 1 | 1 | 1 | 4 | 4 |
| 2 | 2 | 1 | 1 | 1 | 1 | 1 | 1 | 4 |
| 2 | 1 | 1 | 1 | 1 | 1 | 1 | 1 | 3 |
| 1 | 1 | 1 | 1 | 1 | 1 | 1 | 2 | 3 |
| 1 | 1 | 1 | 1 | 1 | 1 | 2 | 3 | 3 |
| 1 | 1 | 1 | 1 | 1 | 2 | 3 | 3 | 3 |

31a

# FIG.16

DISTANCE D BETWEEN FOCUS POINT AND TARGET AREA

31a

31b

# FIG.17A

LUMINANCE VALUE BASED ON DISTANCE
BETWEEN FOCUS POINT AND TARGET BLOCK

|  | $0 \leqq d < 10R$ | $10R \leqq d < 30R$ | $30R \leqq d < 50R$ | $50R \leqq d$ |
|---|---|---|---|---|
| NUMBER OF REPETITIONS | 1 | 2 | 4 | 8 |

R IS DISTANCE OF HORIZONTAL OR VERTICAL SHIFT BY ONE BLOCK

# FIG.17B

APERTURE STOP INFORMATION

|  | $F < 2$ | $2 \leqq F < 6$ | $6 \leqq F < 10$ | $10 \leqq F < 16$ | $16 \leqq F$ |
|---|---|---|---|---|---|
| CORRECTION FACTOR | 1.0 | 0.8 | 0.6 | 0.2 | 0.1 |

# FIG.18

| R | G | R | G |
|---|---|---|---|
| G | B | G | B |
| R | G | R | G |
| G | B | G | B |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010218110 A

- JP 2007050110 A

**Non-patent literature cited in the description**

- **HIROSHI HARASHIMA ; KAORU ODAJIMA ; YOSHIAKI SHISHIKUI ; HIROSHI MIYAKAWA.** ε-separating nonlinear digital filter and its applications. *IEICE Transactions A,* 1982, vol. 4, 297-304